(19) Europäisches Patentamt
European Patent Office
Office européen des brevets

(11) Veröffentlichungsnummer: **0 203 464 B1**

(12) # EUROPÄISCHE PATENTSCHRIFT

(45) Veröffentlichungstag der Patentschrift: **12.12.90**

(51) Int. Cl.[5]: **C05G 1/00**, C05C 3/00

(21) Anmeldenummer: **86106576.1**

(22) Anmeldetag: **14.05.86**

(54) **Verwendung von Ammoniumsyngenit als langsam wirkendes Stickstoffdüngemittel.**

(30) Priorität: **22.05.85 DE 3518369**

(43) Veröffentlichungstag der Anmeldung:
**03.12.86 Patentblatt 86/49**

(45) Bekanntmachung des Hinweises auf die Patenterteilung:
**12.12.90 Patentblatt 90/50**

(84) Benannte Vertragsstaaten:
**AT BE CH DE FR GB IT LI NL SE**

(56) Entgegenhaltungen:
**DE-A- 421 331**
**FR-A- 639 648**
**GB-A- 5 586**

**CHEMICAL ABSTRACTS, Band 79, 1973, Seite 353, Zusammenfassung Nr. 104261h, Columbus, Ohio, US; A. AHMAD et al.: "Feasibility of a mixed fertilizer from urea and superphosphates", & TECHNOLOGY 1972, 9(2-3),203-7**
**CHEMICAL ABSTRACTS, Band 68, 1968, Seite 2030, Zusammenfassung Nr. 21316b, Columbus, Ohio, US; S.K. GHOSH et al.: "Studies on the system (NH4)2SO4-CaSO4-H2O", & TECHNOLOGY (SINDRI) 3(4), 195-9(1966)**

(73) Patentinhaber: **BASF Aktiengesellschaft, Carl-Bosch-Strasse 38, D-6700 Ludwigshafen(DE)**

(72) Erfinder: **Von Maessenhausen, Walter, Neuwiesenstrasse 2, D-6700 Ludwigshafen(DE)**
Erfinder: **Czikkely, Vilmos, Dr., Neckarpromenade 10, D-6800 Mannheim 1(DE)**
Erfinder: **Jung, Johann, Prof. Dr., Hardenburgstrasse 19, D-6703 Limburgerhof(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Für die Versorgung von Pflanzen mit dem Hauptnährstoffelement Stickstoff sind Düngemittel im Handel, die den Stickstoff in Form von leicht löslichen Ammoniumsalzen, Nitraten und/oder Harnstoff enthalten. Diese Düngemittel haben den Nachteil, daß neben merklichen Einwaschverlusten, vor allem bei zu hohen Gaben Pflanzenschädigungen auftreten können. Aus diesem Grunde sind auch Düngemittel mit verzögerter Stickstoffabgabe entwickelt worden. Für die Herstellung solcher sogenannter Depotdünger sind bereits verschiedene Verfahren bekannt geworden. Diese bestehen vor allem darin, daß man a) lösliche Dünger mit schwerlöslichen oder unlöslichen Umhüllungen versieht, b) wenig lösliche Substanzen mit Düngewirkung einsetzt, c) die Nährstoffe an synthetische oder natürliche Träger chemisch oder physikalisch bindet, oder d) ammonium- oder harnstoffhaltige Düngemittel zusammen mit Nitrifikationsinhibitoren einsetzt.

In erster Linie werden als Depotdüngemittel schwerlösliche Verbindungen angeboten, wobei sich vor allem Harnstoff-Aldehyd-Kondensationsprodukte in den Vordergrund geschoben haben.

In jedem Fall haben aber die bisher bekannten synthetisch hergestellten Depotdünger wegen ihres hohen Preises, der auf den relativ komplizierten Herstellungsweg, angefangen bei der Herstellung der Einsatzstoffe bis zu ihrer Umsetzung durch Kondensation zurückzuführen ist, bisher nur in Spezialkulturen des Erwerbsgarten-, Obst- und Landschaftsbaus sowie im Hobbygartenbereich Anwendung gefunden.

Der vorliegenden Erfindung lag daher die Aufgabe zugrunde, ein langsam wirkendes Stickstoffdüngemittel bereitzustellen, das einfach aus im Überfluß vorliegenden Einsatzstoffen hergestellt werden kann.

Es wurde gefunden, daß diese Aufgabe bei der Verwendung von Ammoniumsyngenit $(NH_4)_2SO_4 \cdot CaSO_4 \cdot H_2O$ oder von Mischungen von Ammoniumsyngenit mit anderen Substanzen mit Düngewirkung oder von Mischungen von feinteiligem Ammoniumsulfat und feinteiligem, gegebenenfalls kristallwasserhaltigem Calciumsulfat, Calciumchlorid und/oder Dicalciumphosphat als langsamwirkendes Düngemittel, mit der Maßgabe, daß in den Mischungen ein Molverhältnis von Calcium zu $SO_4^{-}$ von 1 : 2 ± 10% vorliegt und daß im Falle von Ammoniumsyngenit enthaltenden Mischungen der Gehalt an anderen Substanzen mit Düngewirkung 60%, bezogen auf den Ammoniumsyngenitgehalt, nicht übersteigt.

Ammoniumsyngenit ist eine bekannte Substanz der Formel $(NH_4)_2SO_4 \cdot CaSO_4 \cdot H_2O$, die durch Umsetzung der wohlfeilen Ausgangskomponenten Ammoniumsulfat und Calciumsulfat in wäßrigen Lösungen dargestellt werden kann (vgl. Gmelin, Bd. 28 (1961), Seite 1328:

$$(1) \quad CaSO_4+H_2O+(NH_4)_2SO_4 \rightarrow (NH_4)_2SO_4 \cdot CaSO_4 \cdot, H_2O$$

Es wurde weiterhin gefunden, daß man anstelle von Ammoniumsyngenit auch Mischungen von Ammoniumsulfat mit den genannten Calciumsalzen der Phosphorsäure, Schwefelsäure, Salpetersäure und/oder Salzsäure als langsam wirkendes Düngemittel einsetzen kann. Im Falle des Calciumsulfates benötigt man eine Mischung, die neben Calciumsulfat Ammoniumsulfat im Molverhältnis 1:1 enthält, im Falle der anderen Calciumsalze Mischungen, die neben dem Calciumsalz Ammoniumsulfat im Molverhältnis 1:2 enthalten, da ein Mol Ammoniumsulfat für die Umsetzung des Calciumsalzes zu Calciumsulfat benötigt wird. In anderen Worten soll in der Mischung ein Molverhältnis von Calcium zu $SO_4^{--}$ von 1:2 ± 10 % vorliegen.

Ammoniumsyngenit der o.g. Formel hat einen Stickstoffgehalt von 9,8 Gew.%. Aufgrund seiner langsamen Stickstoffabgabe sind keine Wuchsdepressionen feststellbar auch wenn er bei Ausstreuungsfehlern in örtlichen hohen Konzentrationen auftritt.

Selbstverständlich ist es auch möglich, Ammoniumsyngenit bzw. die genannten Mischungen in Kombination mit anderen Substanzen mit Düngewirkung zu verwenden. Hierfür kommen sowohl Einzeldünger wie auch Volldünger in Betracht. Als Einzeldünger können insbesondere auch leicht lösliche Stickstoffdünger eingesetzt werden, um neben einer Komponente mit Depotwirkung auch eine sofort wirkende Stickstoffkomponente der Pflanze zur Verfügung zu stellen. Der Gehalt an diesen anderen Substanzen mit Düngewirkung sollte 60 Gew.%, bezogen auf den Ammoniumsyngenitgehalt, nicht übersteigen, um die Depotdüngewirkung der Gesamtmischung nicht zu beeinträchtigen. Im Falle der Verwendung von Mischungen von Ammoniumsulfat mit den außer Calciumsulfat genannten Calciumsalzen bezieht sich diese Angabe auf den theoretisch errechenbaren Gesamtgehalt an Ammoniumsyngenit, z.B. gemäß folgenden Gleichungen (2) bis (4):

$$(2) \quad CaCl_2 + H_2O + 2(NH_4)_2SO_4 \rightarrow (NH_4)_2SO_4 \cdot CaSO_4 \cdot H_2O + 2NH_4Cl$$

$$(3) \quad Ca(NO_3)_2 + H_2O + 2(NH_4)_2SO_4 \rightarrow (NH_4)_2SO_4 \cdot CaSO_4 \cdot H_2O + 2NH_4NO_3$$

$$(4) \quad CaHPO_4 + H_2O + 2(NH_4)_2SO_4 \rightarrow (NH_4)_2SO_4 \cdot CaSO_4 \cdot H_2O + 2(NH_4)_2HPO_4$$

Die Prüfung von Ammoniumsyngenit auf seine Wirkung kann leicht im Gefäßversuch (Mitscherlich-Gefäße) durchgeführt werden. Als Versuchspflanze ist Weidelgras (Lolium perenne) besonders gut geeignet, da diese Pflanze infolge ihrer Regenerationsfähigkeit mehrere Ernten (Schnitte) erlaubt, ohne

daß dabei eine Veränderung im Bodengefüge vorgenommen werden muß. Auf diese Weise kann die Aufnahme des Stickstoffes und vor allem seine nachhaltige Wirkung während eines längeren Zeitraumes genau verfolgt werden.

Die folgenden Beispiele beweisen die langsame Düngewirkung von Ammoniumsyngenit.

Beispiel 1

In Mitscherlich-Gefäßen wurden auf einem lehmigen Sandboden, der auf 60 % der maximalen Wasserkapazität eingestellt war, Vegetationsversuche mit Weidelgras als Versuchspflanze durchgeführt. Eine Grunddüngung mit sekundärem Natriumphosphat und Kaliumchlorid gewährleistete optimale P-und K-Versorgung. Die Stickstoffgaben betrugen 1,5 und 2,5 g N je Gefäß, wobei beim mittleren Düngungsniveau von 1,5 g N die Proben in den Boden eingemischt wurden; bei der Belastungsdüngung mit 2,5 g N erfolgte die Applikation nach Auflauf auf die Bodenoberfläche. Ammonsyngenit wurde in granulierter und kompaktierter Formulierung angewendet. Ertragsentwicklung und Nährstoffaufnahme über 3 bzw. 4 Schnitte wurde verfolgt.

Ertragsbildung von granuliertem Ammonsyngenit und Harnstoff bei mittlerem Düngungsniveau. 1,5 g N/Gefäß in den Boden eingemischt.

| Substanz | Anzahl der Schnitte | | | Summe |
|---|---|---|---|---|
| | 1. | 2. | 3. | g TS/Gefäß |
| | 11.Juli | 10.Aug. | 20.Okt. | |
| ohne Stickstoff | 11,0 | 2,5 | 2,7 | 16,2 |
| Harnstoff | 17,1* | 24,5 | 6,9 | 48,5 |
| Ammoniumsyngenit gran. | 23,3 | 24,6 | 7,0 | 54,9 |

* Pflanzenschäden

Während bei der Harnstoffdüngung Pflanzenschäden auftraten, zeigten die Ammoniumsyngenitreihen gute Verträglichkeit und Ertragswirkung, was auf die verlangsamte Stickstoffabgabe zurückzuführen ist.

Beispiel 2

Noch deutlicher kommt die überlegene Pflanzenverträglichkeit des Ammonsyngenits bei der Belastungsdüngung zum Ausdruck. Harnstoff führte zu einer sehr starken Schädigung des Pflanzenbestandes. Ammonsyngenit hingegen zeigte eine langanhaltende, stetige Ertragsentwicklung über 4 Schnitte.

Ertragsbildung von granuliertem Ammonsyngenit und Harnstoff bei hohem Düngungsniveau. 2,5 g N/Gefäß nach Auflauf obenauf gedüngt.

| Substanz | Anzahl der Schnitte | | | | Summe |
|---|---|---|---|---|---|
| | 1. | 2. | 3. | 4. | g TS/Gefäß |
| | 11.Juli | 1.Aug. | 21.Aug. | 20.Okt. | |
| Kontrolle (ohne Stickstoff) | 8,5 | 1,6 | 1,1 | 2,3 | 13,5 |
| Harnstoff | 16,7* | 5,6* | 1,3* | 3,0* | 26,6 |
| Ammoniumsyngenit gran. | 18,6 | 25,4 | 10,3 | 3,1 | 57,4 |

* starke Pflanzenschäden

Aus der Tabelle ist zu ersehen, daß bei Stickstoffgaben von 2,5 g N/Gefäß bei Harnstoff starke Pflanzenschäden auftreten, bei Ammoniumsyngenit keine. Die Ertragsbildung nimmt über die Versuchsperiode langsamer ab als bei Harnstoff.

Beispiel 3

In einem weiteren Versuch kam eine kompaktierte Ammonsyngenitprobe zur Anwendung. Auch hier zeigte sich bei hohem Düngungsniveau die deutlich bessere Verträglichkeit, langsame Nährstoffanlieferung und gute Ertragswirkung gegenüber reinem Ammonsulfat.

Ertragsbildung von kompaktiertem Ammonsyngenit und reinem Ammoniumsulfat bei hohem Düngungsniveau. 2,5 g N/Gefäß nach Auflauf obenauf gedüngt.

| Substanz | Anzahl der Schnitte 1. 10.Aug. | 2. 29.Aug. | 3. 21.Sept | 4. 6.Nov. | Summe g TS/Gefäß |
|---|---|---|---|---|---|
| Kontrolle (ohne Stickstoff) | 7,4 | 1,9 | 1,5 | 0,7 | 11,7 |
| Ammoniumsulfat | 3,5* | 6,9* | 13,2* | 16,7 | 40,3 |
| Ammoniumsyngenit komp. | 9,8 | 16,6 | 15,3 | 6,4 | 48,1 |

* starke Pflanzenschäden

Beispiel 4

In diesem Beispiel wird die Überlegenheit von granuliertem Ammonsyngenit in der Nährstoffaufnahme und -ausnutzung gegenüber handelsüblichen, langsamwirkenden N-Düngern deutlich.
2,5 g N/Gefäß obenauf gedüngt.

| Substanz | N-Entzug mg/Gefäß 1. 10.Aug. | 2. 29.Aug. | 3. 21.Sept. | 4. 6.Nov. | Summe mg/Gefäß | Ausnutzung in % |
|---|---|---|---|---|---|---|
| Kontrolle (ohne Stickstoff) | 149 | 32 | 21 | 21 | 233 | - |
| Ureaform* | 538 | 144 | 92 | 90 | 864 | 25,2 |
| Ammoniumsyngenit gran. | 1099 | 1110 | 204 | 46 | 2459 | 89,0 |

* handelsübliche Ureaform-Dünger mit 38 % N

Beispiel 5

In diesem Beispiel wird die Depotdüngewirkung eines äquimolaren Gemisches von $(NH_4)_2SO_4+CaSO_4 \cdot H_2O$ veranschaulicht.
2,5 g N/Gefäß nach Auflauf obenauf gedüngt

| | Anzahl der Schnitte 1. 11.Juli | 2. 1.Aug. | 3. 21.Aug. | 4. 20.Okt. | Summe g TS/Gefäß |
|---|---|---|---|---|---|
| ohne Stickstoff | 8,5 | 1,6 | 1,1 | 2,3 | 13,5 |
| Gemisch $(NH_4)_2SO_4+CaSO_4 \cdot H_2O$ | 16,4 | 22,7 | 13,2 | 3,9 | 56,2 |

**Patentansprüche**

Verwendung von Ammoniumsyngenit $(NH_4)_2SO_4 \cdot CaSO_4 \cdot H_2O$ oder von Mischungen von Ammoniumsyngenit mit anderen Substanzen mit Düngewirkung oder von Mischungen von feinteiligem Ammoniumsulfat und feinteiligem, gegebenenfalls kristallwasserhaltigem Calciumsulfat, Calciumchlorid und/oder Dicalciumphosphat als langsamwirkendes Düngemittel, mit der Maßgabe, daß in den Mischungen ein Molverhältnis von Calcium zu $SO_4^{-}$ von 1 : 2 ± 10% vorliegt und daß im Falle von Ammoniumsyngenit enthaltenden Mischungen der Gehalt an anderen Substanzen mit Düngewirkung 60%, bezogen auf den Ammoniumsyngenitgehalt, nicht übersteigt.

## Claims

Use of ammonium syngenite $(NH_4)_2SO_4 \cdot CaSO_4 \cdot H_2O$ or of a mixture of ammonium syngenite with other substances having a fertilizing action or of a mixture of finely divided ammonium sulfate and finely divided calcium sulfate which may contain water of crystallization, calcium chloride and/or dicalcium phosphate as a slow-acting fertilizer, with the proviso that the mixtures have a calcium : $SO_4^-$ molar ratio of 1 : 2 ± 10%, and that, in the case of an ammonium syngenite-containing mixture, the content of the other substances having a fertilizing action does not exceed 60%, based on the ammonium syngenite content.

## Revendications

Utilisation de syngénite d'ammonium $(NH_4)_2SO_4 \cdot CaSO_4 \cdot H_2O$ ou de mélanges de syngénite d'ammonium avec d'autres substances à action fertilisante ou de mélanges de sulfate d'ammonium finement divisé et de sulfate de calcium, chlorure de calcium et/ou phosphate dicalcique finement divisés, contenant éventuellement de l'eau de cristallisation, comme engrais à action lente, à la condition que dans les mélanges il existe un rapport molaire du calcium à $SO_4^-$ de 1 : 2 ± 10% et que dans le cas de mélanges contenant de la syngénite d'ammonium, la teneur en autres substances à action fertilisante ne dépasse pas 60%, par rapport à la teneur en syngénite d'ammonium.